# EUROPEAN PATENT APPLICATION

(11) **EP 3 977 842 A1**
(43) Date of publication of application: **06.04.2022**
(21) Application number: 21196559.5
(22) Date of filing: 14.09.2021
(51) Int. Cl.: A01D 34/00, A01D 43/08, A01D 75/08

(54) **FORAGE HARVESTER**

(30) Priority: 03.10.2020 GB 202015697
(71) Applicant: AGCO International GmbH, 8212 Neuhausen am Rheinfall (CH)
(72) Inventor: HERMANN, Dan, DK-8930 Randers NØ (DK); Jensen, Jen Christian Skov, DK-8930 Randers NØ (DK)
(74) Representative: AGCO Intellectual Property Department

(57) **Abstract**

A forage harvester is disclosed comprising a chopping drum having a plurality of knife blades, a knife sharpening apparatus, a discharge spout, image capture apparatus for generating a series of captured images of processed crop in the discharge spout, an electronic control unit, and a memory. The electronic control unit determines data relating to aspects of the crop flow from a first image or a first set of images in the series of captured images. The memory stores this data as control data. The electronic control unit then compares data relating to the aspects of crop flow determined from subsequent captured images with the control data. In the event of determining a predetermined deviation of the data relating to the aspects of crop flow from the control data, the control unit is adapted to generate a signal indicating that sharpening of the knife blades is required.

## Description

### FIELD OF THE INVENTION

The present invention relates to an agricultural harvester, in particular to a self-propelled forage harvester for use in cutting an agricultural crop, for example in cutting corn and grass for stock feed.

### BACKGROUND

Self-propelled forage harvesters are usually provided with a rotatable cylindrical cutter drum having a plurality of knives which chop the crop as it is processed by the machine. The knives must be sharpened from time to time. How often depends on the type of crop being harvested. Sharpening often requires an operator to stop the forage harvester in order to allow a knife grinding process to take place.

In the absence of sensor systems in order to measure knife wear this process is typically triggered by a timer operating within an on-board user terminal, based on the average knowledge of the wear on the knife grinding system. Thus any deviation for the average time between grinding either causes additional down-time and wear on the cutting system, or alternatively increased fuel consumption and creation of a suboptimal quality of stock feed.

It is an advantage of the present invention that it addresses these problems.

### SUMMARY OF THE INVENTION

According to a first aspect of the present invention, a forage harvester comprises a chopping drum having a plurality of knife blades, a knife sharpening apparatus, a discharge spout, image capture apparatus for generating a series of captured images of processed crop in the discharge spout, an electronic control unit adapted to determine data relating to aspects of the crop flow from the series of captured images, a memory for storing initial data relating to the aspects of crop flow as control data, the electronic control unit being adapted to compare subsequently determined data with the control data and in the event of determining a predetermined deviation of the subsequently determined data from the control data, the control unit being adapted to generate a signal indicating that sharpening of the knife blades is required.

Preferably the aspects of the crop flow relate to the size, length or type of the processed crop, for example kernels or fibre components.

Preferably the forage harvester further comprises a user terminal and the signal indicating that sharpening of the knife blades is required is a signal to the user terminal to generate an alert to the operator.

Alternatively, the signal indicating that sharpening of the knife blades is required is a signal to the user terminal to generate a signal to actuate the knife sharpening apparatus and additionally the electronic control unit generates a signal to the user terminal to generate an alert to the operator.

Preferably, the alert to the operator comprises a visual indication, an audible indication or both.

According to a second aspect of the invention, a method of determining a need for actuating a knife sharpening apparatus in a forage harvester in accordance with the first aspect of the present invention comprises the steps of capturing a series of images of processed crop flowing in the discharge spout, processing a first image or a first set of images in the series of captured images to acquire initial data relating to the aspects of crop flow from the first image or first set of images and storing this as control data, periodically processing subsequent images in the series of captured images to determine subsequent data relating to aspects of the crop flow, comparing the subsequent data relating to aspects of the crop flow with the control data to determine whether any detected deviation between the subsequent data and the control data exceeds a predetermined deviation and if any detected deviation detected exceeds the predetermined deviation then causing a signal to be generated indicating a need for actuating a knife sharpening apparatus.

According to a third aspect of the present invention, a computer implemented method comprises the steps of acquiring initial data relating to aspects of crop flow, storing the initial data as control data, periodically determining subsequent data relating to aspects of the crop flow, comparing the subsequent data relating to aspects of the crop flow with the control data to determine whether any deviation detected exceeds a predetermined deviation and if any deviation detected exceeds a predetermined deviation then causing a signal to be generated indicating a need for actuating a knife sharpening apparatus.

### BRIEF DESCRIPTION OF THE DRAWINGS

The invention will now be described, by way of example only, with reference to the accompanying drawings, in which:
Figure 1 shows a schematic side view of a forage harvester for use with the present invention;

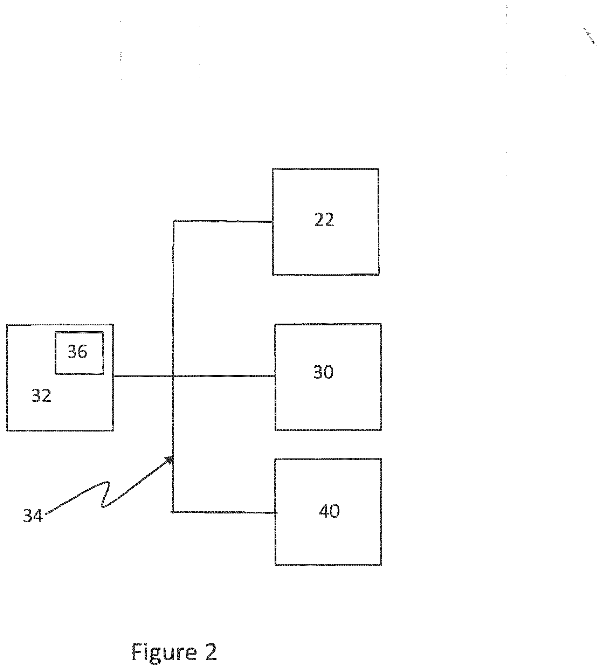

Figure 2 shows elements of a forage harvester for use in the present invention and

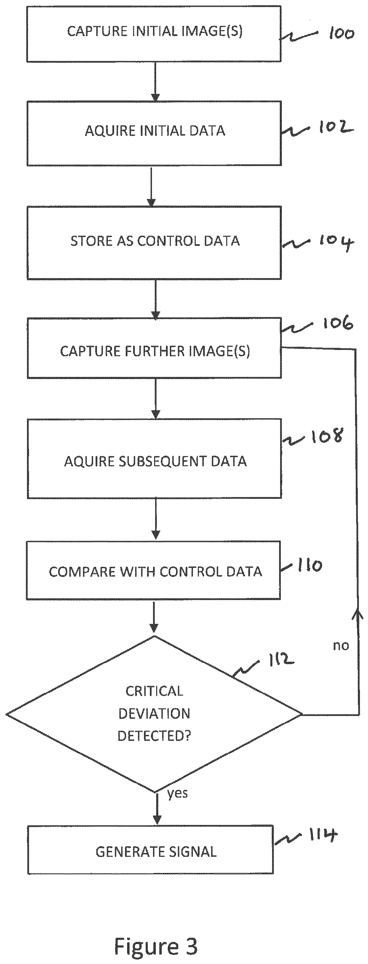

Figure 3 shows a flow diagram illustrating steps in a method in accordance with the present invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

Reference to terms such as longitudinal, transverse and vertical are made with respect to a longitudinal vehicle axis which is parallel to a normal forward direction of travel.

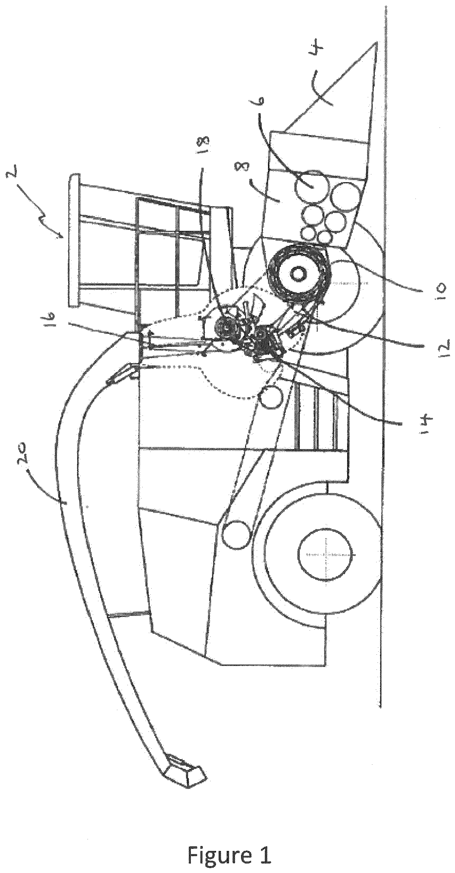

With reference to Figure 1, in a schematic side view the main components of a forage harvester 2 are shown. The forage harvester 2 is provided with a front attachment 4 which contains cutting equipment for cutting a crop. The cut crop is then fed through a series of compression rollers 6 in a compression roller housing 8 to a chopper drum 10 where the crop is chopped into smaller pieces between a shear bar and a plurality of chopper knives mounted on the chopper drum 10. The chopped crop next passes through a first duct 12 and, in the illustrated embodiment, is fed through a cracker unit 14 where the crop is further crushed and threshed. The harvested crop is then blown upwards along a second duct 16 by an accelerator 18 and exits through a spout 20. In an alternative embodiment, the chopped crop may optionally pass directly from the chopper drum 10 to the second duct 16.

As noted, over time chopping of the incoming crop causes wear on the chopper knives in the chopper drum. It is known to provide knife sharpening apparatus within such forage harvesters, which is operated from time to time to maintain the sharpness of the cutting knives.

A user terminal 30 communicates with an electronic control unit 32. The user terminal is conveniently located within a cab of the forage harvester. The electronic control unit 32 is also in electronic or other communication with various components and devices of the forage harvester. Conveniently such communication may be enabled by way of a suitable data communication network 34 such as one compliant with the ISOBUS standard (a network in conformance to ISO 11783). For example, the electronic control unit 32 may be in electronic communication with various actuators, sensors, and other devices within (or outside of) the forage harvester. The electronic control unit 32 may communicate with various other components (including other controllers) in various known ways, including wirelessly.

Various alternative locations for the electronic control unit may be utilized. It will be understood that one or more electronic control units may be employed and that the electronic control unit(s) 32 may be mounted at various locations on the forage harvester or elsewhere. The electronic control unit(s) may be a hardware, software, or hardware and software computing device, and may be configured to execute various computational and control functionality with respect to the forage harvester.

The electronic control unit 32 is also able to access a suitable memory 36. The memory 36 may take any suitable form and is in electronic communication with the electronic control unit 32. The memory 36 is adapted to store, in any suitable manner such as a database or look up table, reference values for a desired parameter.

An image acquisition device 40, such as a camera or a video camera, is located so as to be able to capture images of the crop flowing through the spout 20. The image acquisition device 40 is provided with access to image processing software. Such image processing software may be provided on a processor associated with the image acquisition device or with such a processor forming a part of the electronic control unit 32 as described above. The image processing software is adapted to enable processing of a captured image to determine one or more aspects of the crop flow. These aspects include on or more of the size, length or type of chopped crop, for example kernels or fibre components.

In particular for chopped crop, the average length of the chopped crop may be used as a measure or indication of the sharpness of the cutting knives. In particular, as the knives become blunt, the size of the chopped feed becomes inconsistent such that the average crop size of the chopped crop increases. Other aspects of the crop flow may be used to judge the effective sharpness of the blades.

When the knives are of a desired sharpness, for example because the knives have just been replaced or just been sharpened, the forage harvester is operated and an initial image or an initial series of images of the chopped crop in the spout is acquired (step 100). The initial or initial series of images is then processed to determine a value(s) for the one or more aspects of the crop flow (step 102). These value(s) are then stored as control data for the one or more aspects of the crop flow (step 104).

During future operation of the forage harvester, a further image or a further series of images of the crop flow in the spout are captured (step 106) and the further image or a further series of images processed to generate new value(s) for the one or more aspects of the crop flow (step 108).

These new value(s) for the one or more aspects of the crop flow are then compared with the control values for the one or more aspects of the crop flow and any deviation determined (step 110). The determined deviation is then compared with one or more stored values for critical deviations (step 112). In the event that the determined deviation meets or exceeds the relevant critical deviation, the electronic control unit causes a signal to be generated indicative of a need for actuating a knife sharpening apparatus (step 114). If no such deviation is determined a further image or a further series of images of the crop flow in the spout are captured and the process repeated.

In a first embodiment, the signal may cause the user terminal 30 to cause an operator of the forage harvester to be alerted to the need for actuating an on-board knife sharpening apparatus 22. The user terminal 30 may indicate this in any suitable manner, for example by way of a visual signal and/or an audible signal. The visual signal may, by way of example, take the form of an icon displayed on the user terminal 30. The audible signal may, by way of example, take the form of a tone or spoken message issuing from the user terminal 30. The operator can then arrange for sharpening or replacement of the chopper knives at a convenient opportunity.

In a second embodiment, the signal may cause the knife sharpening apparatus 22 to be actuated and a further signal may be sent to cause the user terminal 30 to cause an operator of the forage harvester to be alerted to the actuation of the knife sharpening apparatus 22. As in the previous embodiment, the user terminal 30 may indicate this in any suitable manner, for example by way of a visual signal and/or an audible signal. The visual signal may, by way of example, take the form of an icon displayed on the user terminal 30. The audible signal may, by way of example, take the form of a tone or spoken message issuing from the user terminal 30.

It will be understood that regular sharpening in the manner described above will lead to more uniform chopping of the crop and consequently a more uniform quality of feed produced by the forage harvester.

From reading the present disclosure, other modifications will be apparent to persons skilled in the art. Such modifications may involve other features which are already known in the field of self-propelled forage harvesters and component parts therefore and which may be used instead of or in addition to features already described herein.

## Claims

1. A forage harvester comprising a chopping drum having a plurality of knife blades, a knife sharpening apparatus, a discharge spout, image capture apparatus for generating a series of captured images of processed crop in the discharge spout, an electronic control unit adapted to determine data relating to aspects of the crop flow from the series of captured images, a memory for storing initial data relating to the aspects of crop flow as control data, the electronic control unit being adapted to compare subsequently determined data with the control data and in the event of determining a predetermined deviation of the subsequently determined data from the control data, the control unit being adapted to generate a signal indicating that sharpening of the knife blades is required.

2. A forage harvester according to claim 1, **characterised in that** the aspects of the crop flow relate to the size, length or type of the processed crop.

3. A forage harvester according to claim 1 or claim 2, **characterised in that** the forage harvester further comprises a user terminal and the signal indicating that sharpening of the knife blades is required is a signal to the user terminal to generate an alert to the operator.

4. A forage harvester according to claim 1 or claim 2, **characterised in that** the signal indicating that sharpening of the knife blades is required is a signal to the user terminal to generate a signal to actuate the knife sharpening apparatus and additionally the electronic control unit generates a signal to the user terminal to generate an alert to the operator.

5. A forage harvester according to claim 3 or claim 4, **characterised in that** the alert to the operator comprises a visual indication, an audible indication or both.

6. A method of determining a need for actuating a knife sharpening apparatus in a forage harvester comprising a chopping drum having a plurality of knife blades, a knife sharpening apparatus, a discharge spout, image capture apparatus for generating a captured image of processed crop in the discharge spout, an electronic control unit adapted to determine data relating to aspects of the crop flow from the captured image, and a memory for storing data relating to the aspects of crop flow as control data, comprises the steps of capturing a series of images of processed crop flowing in the discharge spout, processing a first image or a first set of images in the series of captured images to acquire initial data relating to the aspects of crop flow from the first image or first set of images and storing this as control data, periodically processing subsequent images in the series of captured images to determine subsequent data relating to aspects of the crop flow, comparing the subsequent data relating to aspects of the crop flow with the control data to determine whether any detected deviation between the subsequent data and the control data exceeds a predetermined deviation and if any detected deviation detected exceeds the predetermined deviation then causing a signal to be generated indicating a need for actuating a knife sharpening apparatus.

7. A computer implemented method comprises the steps of acquiring initial data relating to aspects of crop flow, storing the initial data as control data, periodically determining subsequent data relating to aspects of the crop flow, comparing the subsequent data relating to aspects of the crop flow with the control data to determine whether any deviation detected exceeds a predetermined deviation and if any deviation detected exceeds a predetermined deviation then causing a signal to be generated indicating a need for actuating a knife sharpening apparatus.
